# EUROPÄISCHE PATENTANMELDUNG

(11) **EP 2 386 230 A1**
(43) Veröffentlichungstag der Anmeldung: **16.11.2011**
(21) Anmeldenummer: 11160854.3
(22) Anmeldetag: 01.04.2011
(51) Int. Cl.: A47J 31/44

(54) **Haushaltsgerät**

(30) Priorität: 12.05.2010 DE 202010005438 U
(71) Anmelder: MELITTA HAUSHALTSPRODUKTE GmbH & Co. Kommanditgesellschaft, 32427 Minden (DE)
(72) Erfinder: Bergmeier, Jürgen, 32361, Preußisch Oldendorf (DE)
(74) Vertreter: Dantz, Jan Henning

(57) **Zusammenfassung**

Ein Haushaltsgerät (1), umfasst mindestens ein Bauteil (4, 13) mit einem elektrischen Verbraucher (5, 11), wobei das Bauteil (4, 13) an seiner Oberfläche zumindest bereichsweise mit Fasern beflockt ist.

## Beschreibung

Die vorliegende Erfindung betrifft ein Haushaltsgerät mit mindestens einem Bauteil mit einem elektrischen Verbraucher.

Es gibt Haushaltsgeräte, insbesondere für die Herstellung von Heißgetränken, wie Filterkaffeemaschinen, bei denen in einem Gehäuse eine Heizeinrichtung verwendet wird. Die Heizeinrichtung erwärmt dabei das zu erhitzende Fluid und gibt im Übrigen Wärme an die Umgebung ab. Dies führt zu einem Energieverlust aufgrund der Abstrahlung und zudem werden die umgebenden Bauteile durch die Wärmeabstrahlung unnötig belastet, was zu Alterung oder Geruchsbildung führen kann.

Um den Energieverbrauch bei Heizeinrichtungen zu verringern, sind ummantelte bzw. umschäumte Heizelemente bekannt. Solche Heizelemente sind allerdings teuer in der Herstellung und besitzen einen hohen Platzbedarf. Dies steht der Anforderung an besonders kompakte Geräte entgegen.

Bei Haushaltsgeräten besteht zudem das Problem, dass metallische Bauteile bei wärmerer, feuchter Umgebungsluft schnell eine Kondensatschicht bilden, was zu einer Schimmelbildung im Haushaltsgerät, beispielsweise bei einem Kaffeevollautomaten, führen kann. Solche Schimmelbildung an einzelnen Bauteilen eines Haushaltsgerätes wird vom Verbraucher als unhygienisch empfunden.

Es ist daher Aufgabe der vorliegenden Erfindung, ein Haushaltsgerät zu schaffen, bei dem auf einfache Weise eine gute Isolierung erhalten wird und dennoch ein kompakter Aufbau möglich ist.

Diese Aufgabe wird mit einem Haushaltsgerät mit den Merkmalen des Anspruches 1 gelöst.

Erfindungsgemäß umfasst das Haushaltsgerät mindestens ein Bauteil mit einem elektrischen Verbraucher, dessen Oberfläche zumindest bereichsweise mit Fasern beflockt ist. Die mit Fasern beflockten Bereiche sind dadurch isoliert, so dass die Wärmeabstrahlung verringert ist, was den Energieverbrauch reduziert. Zudem werden die umgebenden Bauteile durch die geringere Wärmeabstrahlung auch weniger belastet. Sollte das Bauteil im kühleren Zustand in Kontakt mit wärmerer feuchter Luft kommen, wird eine Kältebrücke und die Ausbildung von Kondensat durch die Isolierung vermindert, so dass auch die Schimmelbildung an dem Bauteil vermindert wird. Die beflockten Bereiche können dabei sehr kompakt ausgebildet sein und es ist nicht notwendig, eine Gerätekonstruktion zu verändern.

Vorzugsweise nimmt die Beflockung des Bauteils über 50 %, insbesondere über 60 % der Oberfläche ein, so dass ein erheblicher Teil der Oberfläche wärmeisoliert ist. Sofern die Oberfläche nicht für andere Zwecke, beispielsweise als Abstellfläche, benutzt werden muss, kann das Bauteil auch nahezu vollständig beflockt sein, um eine unerwünschte Wärmeabstrahlung zu vermeiden. Die Beflockung kann zudem auch zur Schallisolierung eingesetzt werden, sofern der elektrische Verbraucher nicht als Heizeinrichtung, sondern beispielsweise als Pumpe oder Mahlwerk ausgebildet ist.

Die Flockfasern weisen vorzugsweise eine Länge zwischen 0,4 mm bis 3 mm, insbesondere 0,5 mm bis 1 mm, auf, um eine ausreichende Isolierung bereitzustellen. Die Flockfasern können dabei aus Baumwolle, Polyamid und/oder Viskose hergestellt sein, wobei das Material vorzugsweise so gewählt ist, dass dieses bis 200° C temperaturbeständig ist. Die Dicke der Fasern kann für den gewünschten Einsatzzweck frei gewählt werden, wobei insbesondere Fasern mit einer Dicke zwischen 1 bis 20 dtex eingesetzt werden.

Gemäß einer bevorzugten Ausgestaltung der Erfindung ist der elektrische Verbraucher als Heizeinrichtung ausgebildet. Die Heizeinrichtung kann dabei eine Warmhalteplatte für ein Gefäß umfassen und auf der zur Abstellfläche für das Gefäß abgewandten Seite zumindest bereichsweise mit einer Beflockung vorgesehen sein. Dadurch wird auf der von der Abstellfläche abgewandten Seite eine Isolierung durch die Beflockung bereitgestellt. Es ist auch möglich, die Heizeinrichtung als Durchlauferhitzer auszubilden, so dass ein metallischer Block vorgesehen ist, in dem eine fluidführende Leitung und ein Heizdraht angeordnet sind. Dann kann der metallische Block vollständig beflockt sein, um eine Abstrahlung an der Oberfläche zu verringern.

In einer weiteren Ausgestaltung ist der elektrische Verbraucher als Pumpe oder Mahlwerk ausgebildet. Gerade bei Kaffeevollautomaten kommt es zu hoher Geräuschentwicklung, was durch die Beflockung der Oberfläche vermindert werden kann.

Das Bauteil mit der Beflockung ist vorzugsweise in einem Gehäuse des Haushaltsgeräts angeordnet, beispielsweise in einem Kaffeevollautomaten oder einem Gehäuse einer Filterkaffeemaschine. Durch die Beflockung kann auch eine Schimmelbildung, insbesondere aufgrund unerwünschter Kondensatbildung an dem Bauteil, vermindert werden. Hierfür können die Fasern auch mit einem Fungizid beschichtet sein, um dauerhaft eine Schimmelbildung zu vermeiden.

Die Erfindung wird nachfolgend anhand zweier Ausführungsbeispiele mit Bezug auf die beigefügten Zeichnungen näher erläutert. Es zeigen:
- Figur 1: eine geschnittene Seitenansicht durch eine Filterkaffeemaschine;
- Figur 2: eine Unteransicht durch die Filterkaffeemaschine der Figur 1, und
- Figur 3: eine perspektivische Ansicht eines Heizblocks für einen Kaffeevollautomaten.

Eine Filterkaffeemaschine 1 umfasst ein Gefäß 2 in Form einer Glaskanne, die auf einer Warmhalteplatte 3 abgestellt ist. Die Warmhalteplatte 3 ist Bestandteil einer Heizeinrichtung 4, die einen metallischen Körper umfasst, der einen Heizdraht 5 umgibt. In dem metallischen Körper 4 ist ferner einen fluidführende Leitung 6 angeordnet, so dass mittels des Heizdrahtes 5 sowohl ein durch die Leitung 6 strömendes Fluid erwärmt wird als auch die Platte 3 erhitzt wird.

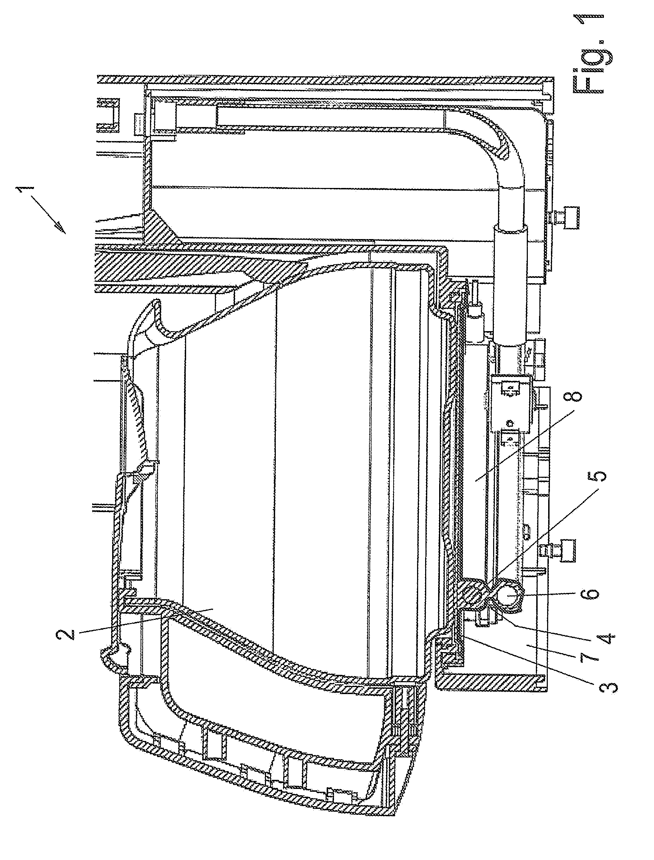

Um eine Wärmeabstrahlung des metallischen Körpers 4 an die Umgebung zu vermeiden, ist der metallische Körper 4 mit einer Beflockung versehen, die aus Fasern aus einem temperaturbeständigen Material gebildet ist. Die Fasern bestehen beispielsweise aus einem temperaturbeständigen Kunststoff, die über eine Klebeschicht an dem metallischen Körper 4 fixiert sind. Dabei kann über 50 %, insbesondere auch über 80 %, des metallischen Körpers 4 mit einer Beflockung beschichtet sein, die als Isolierung eine Wärmeabstrahlung vermindert. Der metallische Körper 4 ist dabei in einem Gehäuse 7 der Filterkaffeemaschine 1 angeordnet und von außen nicht sichtbar. In Figur 1 ist die Beflockung mit dem Bezugszeichen 8 beispielhaft dargestellt, wobei sämtliche nicht für andere Zwecke benötigten Bereiche der Oberfläche beflockt sein können.

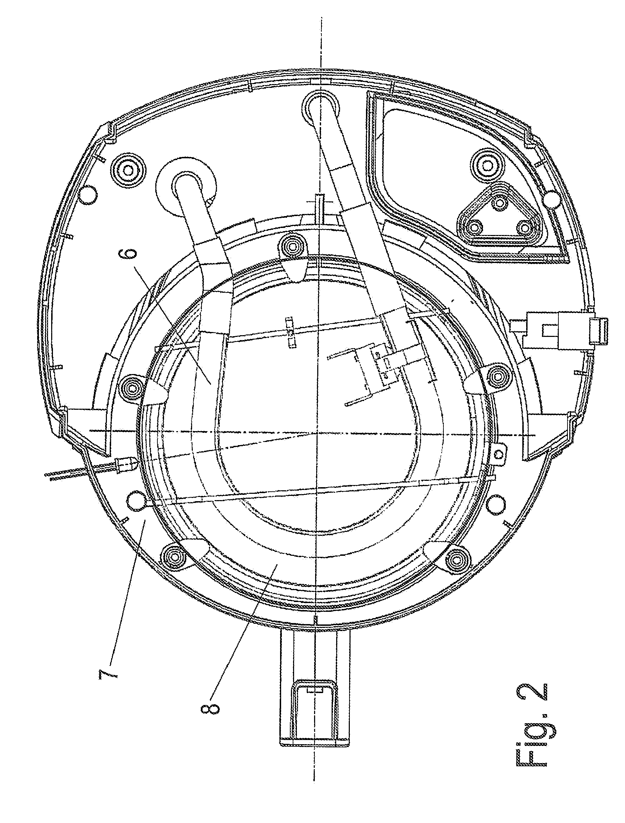

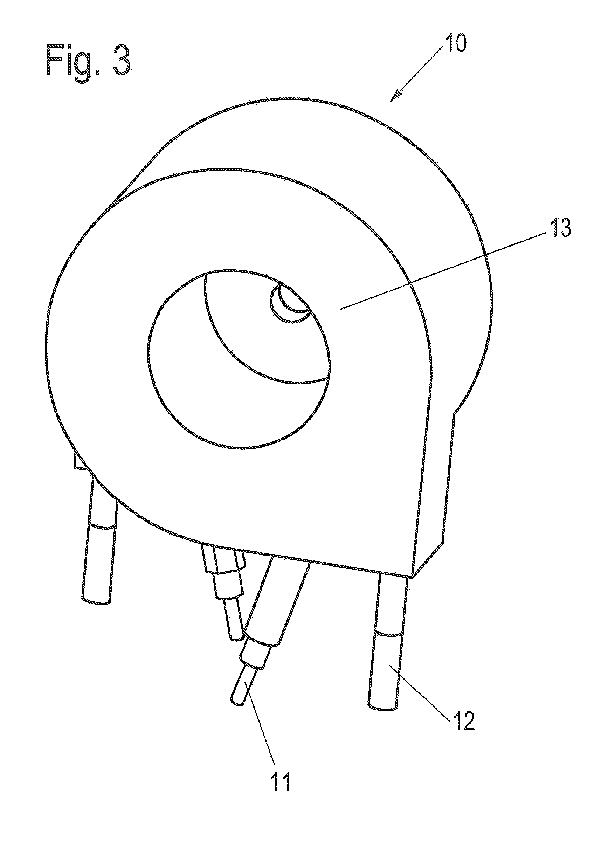

In Figur 2 ist eine Unteransicht der Filterkaffeemaschine 1 gezeigt, wobei die fluidführende Leitung 6 erkennbar ist, die in einer Schlaufe an der Heizeinrichtung angeordnet ist. Der beheizte Bereich 8 ist dabei mit einer Flockschicht versehen. In Figur 3 ist ein Heizblock 10 für einen Kaffeevollautomaten dargestellt, der in einem Gehäuse von außen nicht sichtbar montiert wird. Der Heizblock 10 umfasst einen metallischen Körper 13, durch den ein Heizdraht 11 sowie eine fluidführende Leitung 12 geführt sind. An seiner Oberfläche ist der metallische Block 13 vollständig mit einer Flockschicht versehen, die zur Wärmeisolierung dient und die Wärmeabstrahlung bei Erhitzen des Blockes 13 vermindert. Die Flockschicht kann dabei aus Fasern gebildet sein, die mit einem Fungizid beschichtet sind, um eine Schimmelbildung an der Oberfläche des Heizblockes 13 zu verhindern.

Der Einsatz von geflockten Bauteilen kann auch in anderen Haushaltsgeräten erfolgen. Beispielsweise kann das Bauteil auch in einer Espressomaschine, Portionskaffeemaschine, einem Wasserkocher oder einem anderen Gerät zur Herstellung von Heißgetränken angeordnet sein. Zudem können beflockte Bauteile auch in anderen Haushaltsgeräten verwendet werden, die nicht zur Herstellung von Heißgetränken dienen, aber ebenfalls eine Heizeinrichtung umfassen, wie beispielsweise Toaster, Waffeleisen oder andere Back- und Kochgeräte.

## Patentansprüche

1. Haushaltsgerät (1), mit mindestens einem Bauteil (4, 13) mit einem elektrischen Verbraucher (5,11), **dadurch gekennzeichnet, dass** das Bauteil (4, 13) an seiner Oberfläche zumindest bereichsweise mit Fasern beflockt ist.

2. Haushaltsgerät nach Anspruch 1, **dadurch gekennzeichnet, dass** die Beflockung des Bauteils an über 50 %, vorzugsweise über 60 %, der Oberfläche ausgebildet ist.

3. Haushaltsgerät nach Anspruch 1 oder 2, **dadurch gekennzeichnet, dass** Flockfasern mit einer Länge zwischen 0,4 mm bis 3 mm, insbesondere 0,5 mm bis 1 mm, vorgesehen sind.

4. Haushaltsgerät nach einem der Ansprüche 1 bis 3, **dadurch gekennzeichnet, dass** die Flockfasern aus einem bis 200° C temperaturbeständigen Material hergestellt sind.

5. Haushaltsgerät nach einem der Ansprüche 1 bis 4, **dadurch gekennzeichnet, dass** der elektrische Verbraucher (5, 11) als Heizeinrichtung ausgebildet ist.

6. Haushaltsgerät nach Anspruch 5, **dadurch gekennzeichnet, dass** die Heizeinrichtung eine Warmhalteplatte (3) für ein Gefäß (2) umfasst und auf der zur Abstellfläche für das Gefäß (2) abgewandten Seite zumindest bereichsweise eine Beflockung vorgesehen ist.

7. Haushaltsgerät nach Anspruch 5 oder 6, **dadurch gekennzeichnet, dass** die Heizeinrichtung einen metallischen Block (13) aufweist, in dem eine fluidführende Leitung (12) und ein Heizdraht (11) angeordnet sind.

8. Haushaltsgerät nach einem der Ansprüche 1 bis 7, **dadurch gekennzeichnet, dass** der elektrische Verbraucher als Pumpe oder Mahlwerk ausgebildet ist.

9. Haushaltsgerät nach einem der Ansprüche 1 bis 8, **dadurch gekennzeichnet, dass** das Bauteil (4, 13) in einem Gehäuse (7) des Haushaltsgeräts angeordnet ist.

10. Haushaltsgerät nach einem der Ansprüche 1 bis 9, **dadurch gekennzeichnet, dass** das Haushaltsgerät als Filterkaffeemaschine (1), Kafieevollautomat, Espressomaschine oder anderes Gerät zur Herstellung von Heißgetränken ausgebildet ist.
